Europäisches Patentamt

(19) European Patent Office

Office européen des brevets

(11) Publication number: **0 075 643**
**A2**

(12) # EUROPEAN PATENT APPLICATION

(21) Application number: 82101764.7

(51) Int. Cl.³: **F 02 B 23/00**

(22) Date of filing: 06.03.82

(30) Priority: 24.09.81 JP 151066/81

(43) Date of publication of application:
06.04.83 Bulletin 83/14

(84) Designated Contracting States:
DE FR GB IT

(71) Applicant: Kokubo, Masao
1391-2, Azanagayama, Kotta
Tama-City Tokyo(JP)

(72) Inventor: Mimura, Motoaki
6-9-5, Asagayakita
Suginami-ku Tokyo(JP)

(74) Representative: Vetter, Ewald Otto, Dipl.-Ing.(FH)
Philippine-Welser-Strasse 14
D-8900 Augsburg(DE)

(54) Internal combustion engine.

(57) Internal combustion engine comprising a cylinder block (1) including a cylinder and a piston (3) reciprocally movable within the cylinder, a cylinder head (2) provided with suction ports (5a, 5b) and an exhaust port (11) open to the cylinder, respectively suction and exhaust valves (6a, 6b, 8) provided adjacent to the upper dead point of the piston. The suction valves (6a, 6b) are disposed substantially uprightly in the direction of movement of the piston (3) and the exhaust valve (8) is inclined with respect to the direction of movement of the piston with the bottom of the exhaust valve directing towards the suction valves to define the combustion chamber (12) between the bottom of the exhaust valve and the upper surface of the head of the piston (3).

FIG. 1

EP 0 075 643 A2

Internal Combustion Engine

Background of the Invention

This invention relates to improvements in internal combustion engines and more particularly, to an internal combustion engine which provides improved suction and combustion
efficiencies of gaseous mixture, improved exhausting efficiency of burnt gases, enhanced output and reduced consumption
ratio of fuel.

There have been proposed and practically employed a variety of combution chambers for internal combustion engines.
In the so-called wedge type combustion chamber for an internal
combustion engine, for example, in which a valve is disposed
within the cylinder head at an inclined angle with respect to
the vertical axis of the cylinder head to define a space between the bottom of the inclined valve and the head of the
piston when the piston is at its upper dead point so as to
serve as the combustion chamber for the engine, it has been
known that when gaseous mixture flows through the suction port
or ports into the combustion chamber, the flow of the gaseous
mixture encounters relatively less resistance and combustion
efficiency is high.

And in the so-called semi-spherical combustion chamber
for an internal combustion engine in which the suction and
exhaust valves are disposed within the cylinder head inclining
towards each other at an angle with respect to the vertical axis of the cylinder head to define a semi-spherical space between the bottoms of the valves and the head of the piston
when the piston is at its upper dead point so as to serve as
the combustion chamber for the internal combustion engine, it
has been found that suction and exhausting efficiencies are
high and thermal efficiency is also high because flames propagate rapidly throughout the combustion chamber immediate after
the ignition of gaseous mixture. Thus, the semi-spherical
type combustion chamber has been in most cases employed in recent internal combustion engines. The reason is that in the
semi-spherical type combustion chamber, when gaseous mixture
flows into the combustion chamber, the gaseous mixture flow
forms a revolving whirl easily and the whirl remains to exist
even after the compression down of the gaseous mixture so as
to provide relatively high whirl effects to thereby accelerate
the combustion of gaseous mixture. And also as to the flow
resistance referred to hereinabove in connection with the wedge
type combustion chamber; although the semi-spherical type combustion chamber is subjected to the limitations that the diameter of the suction valve is generally required to be larger
than that of the exhaust valve by about 20% and the effective
area at the cylinder head is limited to a relatively small
value in consideration of the mounting position of the ignition
plug, the semi-spherical type combustion chamber is advantageous over the wedge type combustion chamber also with respect
to these aspects.

However, in either one of the wedge and semi-spherical type combustion chambers, the arrangement is so made that both the suction and exhaust valves are similarly in direct communication with the combustion chamber at the cylinder head. Especially, in the semi-spherical type combustion chamber, although whirl effects which are one means to propagate flames throughout the cylinder are satisfactory, this type of combustion chamber has the disadvantage that when the piston reaches a position adjacent to the upper dead point on the compression stroke thereof, the whirl or squashing effects which force the gaseous mixture present in the quenching zone out of the zone can not be easily obtained.

Furthermore, in both the prior art wedge-and semi-spherical type combustion chambers referred to hereinabove, there exists the problem that the so-called masking effects occur easily to block the free passage of air flowing through the suction port by the barricade provided by the wall of the combustion chamber and such masking effects are especially conspicuous.

## Summary of the Invention

Therefore, the inventor has endeavored to improve the construction of the prior art combustion chamber for internal combustion engines with the aim to provide sufficient suction-, combustion- and scavenging efficiencies and has provided an economical internal combustion engine of high output having an improved combustion chamber in which suction and exhaust valves are provided within the cylinder head adjacent to the upper dead point of the piston reciprocally movable within the cylinder and the suction valves are disposed substantially uprightly in the direction of movement of the piston and the exhaust valve is inclined with respect to the direction of movement of the piston with the bottom of the exhaust valve directing to the suction valves to thereby define the combustion chamber between the inclined bottom of the exhaust valve and the head of the piston.

The above and other objects and attendant advantages of the present invention will be more readily apparent to those skilled in the art from a reading of the following detailed description in conjunction with the accompanying drawing which shows one preferred embodiment of the invention for illustration purpose only, but not for limiting the scope of the same in any way.

### Brief Description of the Drawing

Fig. 1 is a fragmentary vertically sectional view of one embodiment of the internal combustion engine constructed in accordance with the present invention; and

Fig. 2 is a bottom view of the combustion chamber in said internal combustion engine as seen in the arrow direction along the I - I line of Fig. 1.

## Preferred Embodiment of the Invention

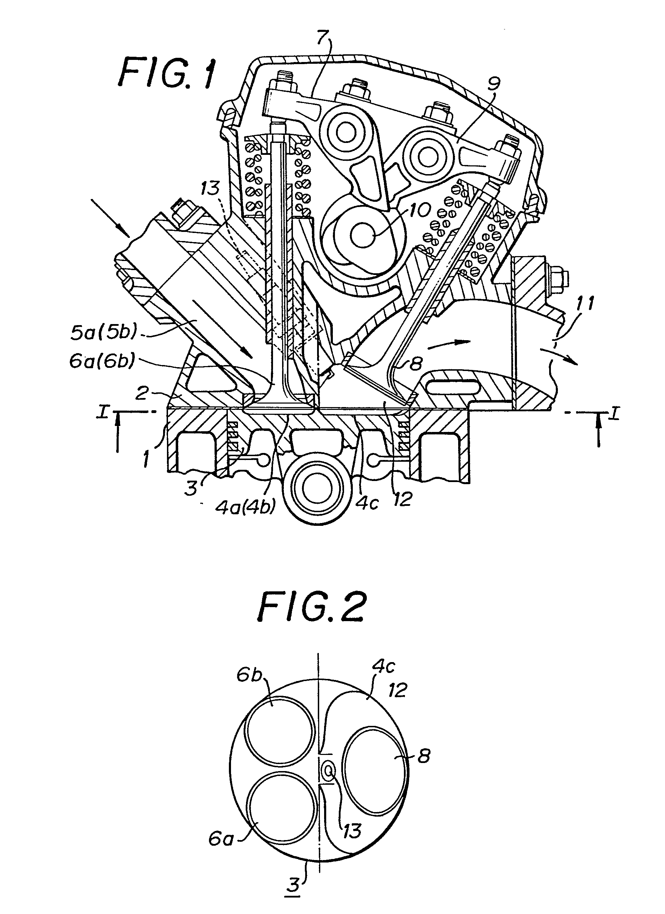

One preferred embodiment of the internal combustion engine
of the invention will be in detail described referring to the
accompanying drawing.  Reference numeral 1 denotes a cylinder
block, reference numeral 2 denotes a cylinder head and reference numeral 3 denotes a piston received in the cylinder within the cylinder block 1 for reciprocal movement therein.  The
cylinder block 2 is provided with two suction ports 5a, 5b and
one exhaust port 11 and also provided in the cylinder block 2
adjacent to the ends of the suction ports 5a, 5b and of the
exhaust port 11 where the ports are respectively open to the
interior of the cylinder block are suction valves 6a, 6b and
an exhaust valve 8.  The suction valves 6a, 6b are also positioned adjacent to the upper dead point of the piston 3 reciprocally movable within the cylinder (the position of the piston
as shown in Fig. 1) and disposed substantially uprightly in
the direction of movement of the piston 3.

The exhaust valve 8 is disposed at an inclined angle with
respect to the direction of movement of the piston 3 with the
bottom of the exhaust valve being directed to the suction
valves 6a, 6b and as a result, when the piston 3 is at its
upper dead point just below the bottom of the valve 8 as shown
is Fig. 1, a combustion chamber 12 is defined within the cylinder head 2 by the bottom of the exhaust valve 8 and the head
of the piston 3.

In Fig. 1, reference numerals 7 and 9 denote rocker arms, reference numeral 10 denotes a cam shaft, reference numeral 13 denotes an ignition plug, reference numerals 4a, 4b denote undercuts for air escape at the opening time of the suction valves formed in the head of the piston and having a configuration in conformity with that of the bottoms of the suction valves 6a, 6b and reference numeral 4c denotes a recess including an undercut for exhaust gas escape at the opening time of the exhaust valve formed in the head of the piston and having a configuration in conformity with that of the combistion chamber 12.

The suction ports 5a, 5b are so designed that gaseous mixture may flow into the cylinder at the cylinder head 2 in a tangential plane thereto following a suitable sinuous path to provide sufficient whirling effects without causing masking effects. When the piston 3 reaches a position beyond the upper dead point on its suction stroke, the upper face of the head of the piston serves as a guide face for the gaseous mixture sucked into the cylinder head and provides a satisfactory whirl in addition to guiding effects provided by the side of the cylinder. Thus, the gaseous mixture flows into the cylinder without causing masking effects and functions to force the whole gaseous mixture present within the quenching zone to flow into the combustion chamber 12 when the piston 3 reaches a position adjacent to the upper dead point on the succeeding compression stroke to thereby minimize the amount of the gaseous mixture remaining within the quenching zone.

Such squashing whirl just prior to the commencement of combustion is quite effective in accelerating the combustion rate and the reduced surface area of the combustion chamber 12 can substantially reduce cooling loss to thereby appreciably improve the thermal efficiency of the internal combustion engine.

Furthermore, in the illustrated internal combustion engine of the invention in which the combustion chamber 12 directly communicates with only the exhaust port 11, the escape of the sucked gaseous mixture from the combustion chamber through the suction ports 5a, 5b which would occur if the combustion chamber 12 is also in communication with the suction ports 5a, 5b can be perfectly prevented and since the rich gaseous mixture flowing into the engine through the suction ports 5a, 5b is forced into the combustion chamber 12 as the piston 3 moves within the cylinder which in turn forces the burnt gases present in the combustion chamber 12 into the exhaust port 11 to be discharged out of the engine, satisfactory scavenging effects can be obtained.

As clear from the foregoing description on the preferred embodiment of the internal combustion engine according to the present invention, first, since the exhaust valve 8 is inclined with respect to the direction of movement of the piston 3 within the cylinder and only the space defined between the bottom of the exhaust valve 8 and the head of the piston 3 when the piston is at its upper dead point serves as the combustion chamber 12, the surface area of the combustion chamber can be minimized and the cooling loss can be also minimized to thereby substantially improve the thermal efficiency of the engine. Second, in addition to the construction of the combustion chamber 12 as described hereinabove, since the suction valves are positioned adhacent to the upper dead point of the piston reciprocally movable within the cylinder and disposed substantially upright in the direction of movement of the piston, the suction valves extend substantially parallel to the mounting plane of the cylinder head to thereby substantially reduce the opportunity of occurrence of masking effects when the gaseous mixture flows into the combustion chamber. Furthermore, when the piston reaches a position beyond its upper dead on the suction stroke, the upper surface of the head of the piston serves as a guide face for the incoming gaseous mixture to provide a satisfactory whirl in combination with guide effects provided by the side of the cylinder. Furthermore, when the piston reaches a position adjacent to the upper dead point as the piston moves on the compression stroke, since the piston forces substantially the whole gaseous mixture present within the quenching zone into the combustion chamber while providing squashing effects, only a quite small amount of the gaseous mixture remains within the quenching zone to thereby substantially reduce the amount of unburnt gaseous mixture. And the squashing whirl occuring at such a time is quite effective to accelerate the combustion rate of gaseous mixture and since whirling effects due to the whirl involving gaseous mixture therein can be easily provided within the semi-spherical combustion chamber positioned right below the exhaust valve, the combustion efficiency of the engine can be improved resulting in substantial reduction of the consumption ratio of fuel. Third, in the illustrated embodiment of the internal combustion engine of the present invention, since two suction valves are provided per cylinder, the exhaust valve and ignition plug can fully utilize the effective area right above the piston.

While one particular embodiment of this invention has been shown in the drawing and described hereinabove, it will be apparent that many changes may be made in the form, arrangement and positioning of the various elements of the combination. In consideration thereof it should be understood that the preferred embodiment of the invention disclosed herein is intended to be illustrative only and not intended to limit the scope of the invention.

What is claimed is :

1. . Internal combustion engine comprising a cylinder block including at least one cylinder and a piston received in said cylinder for reciprocal movement therein; and a cylinder head provided with at least one suction port and one exhaust port and including at least one suction valve disposed within said suction port, and an exhaust valve disposed within said exhaust port, characterized by said suction valve is positioned adjacent to the upper dead point of said reciprocally movable piston and disposed substantially uprightly in the direction of movement of the piston and said exhaust valve is also positioned adjacent to the upper dead point of said reciprocally movable piston and disposed at an inclined angle with respect to the direction of movement of the piston to thereby define a combustion chamber between the bottom of the exhaust valve and the head of the piston.

2. The internal combustion engine as set forth in Claim 1, in which said exhaust valve is disposed at an inclined angle with respect to the direction of movement of said piston with the bottom of the exhaust valve directing towards said suction valve to thereby define a combustion chamber between the bottom of the exhaust valve and the head of said piston.

3. The internal combustion engine as set forth in Claim 1 or 2, in which a plurality of suction valves are positioned adjacent to the upper dead point of said piston reciprocally movable within said cylinder and disposed substantially uprightly in the direction of movement of the piston.

4. The internal comvustion engine as set forth in any one of Claims 1 through 3, in which two suction valves are provided per cylinder.

FIG.1

FIG.2